# EUROPEAN PATENT SPECIFICATION

(11) **EP 2 373 523 B1**
(45) Date of publication and mention of the grant of the patent: **20.03.2013**
(21) Application number: 09784077.1
(22) Date of filing: 11.12.2009
(51) Int. Cl.: B60R 21/20

(54) **HYBRID GAS GENERATOR, TO INFLATE AN INFLATABLE AIRBAG FOR AUTOMOTIVE VEHICLE**
HYBRIDGASGENERATOR ZUM AUFBLASEN EINES AUFBLASBAREN AIRBAGS FÜR EIN KRAFTFAHRZEUG
GÉNÉRATEUR DE GAZ HYBRIDE POUR GONFLER UN COUSSIN GONFLABLE DESTINÉ À UN VÉHICULE AUTOMOBILE

(30) Priority: 15.12.2008 FR 0858602
(43) Date of publication of application: 12.10.2011
(73) Proprietor: Autoliv Development AB, 447 83 Vårgårda (SE)
(72) Inventor: CAMBORDE, Franck, F-29000 Quimper (FR); CHAUVIN, Aurélie, 29590 Le Faou (FR)
(74) Representative: Regimbeau
(86) International application number: PCT/EP2009/066890
(87) International publication number: WO 2010/069862

(56) References cited:
- EP-A- 1 371 526
- FR-A- 2 793 748
- FR-A- 2 829 570
- FR-A- 2 902 389
- US-A- 5 803 493

## Description

The present invention concerns a gas generator to inflate a protective airbag for automotive vehicle.

Its subject-matter is more precisely a generator of hybrid type comprising a tubular case which contains two sources of gas used for inflation.

The first consists of a pyrotechnic charge (simple or double) whose ignition caused by the pyrotechnic initiator to which the pyrotechnic charge lies adjacent, generates combustion gases.

The second consists of a gas stored under high pressure in an enclosed chamber.

The case consists for example of two coaxial hollow tubular bodies, fixed end to end, namely a container containing the pyrotechnic charge and a reservoir containing the gas under pressure.

The interface between these two elements is such that ignition of the pyrotechnic charge causes release of the gas stored in the chamber; generally by rupturing of a rupture disk.

The two gases escape together from the case, and may or may not be mixed, and concomitantly ensure inflation of the airbag.

In some devices, the escape of the gases used to inflate the airbag occurs via discharge orifices which are arranged at one end of the case (reservoir side) as is described for example in documents FR 2 902 389 and 2 829 570.

In others, the discharge orifices are positioned in a central or approximately central region facing a portion of the case which lies between the pyrotechnic charge and the storage chamber for the gas under pressure. An embodiment of this type is described in document FR-2 793 748 for example.

The axial dimension of the case can be notably greater than its diameter, the generator then being particularly adapted to inflate an airbag of curtain type, capable of ensuring lateral protection for the head of an occupant of the vehicle.

In this type of application, as in others e.g. passenger airbags, it is desirable for the accumulated escaping of the two gases used to inflate the airbag does not occur immediately at a fast flow rate.

Failing this, there is a risk that the gases under pressure may place too abrupt demand on the flexible envelope of the fully folded bag, which may damage this bag and lead to ill-functioning of the device. In this respect, it is to be noted that the gas under pressure is generally stored under a very high pressure, by way of indication in the order of 50 MPa, which means that its sudden release may occur at a very fast rate if the section of the passageway for its release is wide.

Similarly, in some situations such as those generally called "OOP" (Out Of Position), a fast flow rate at the start of functioning is not desirable.

To solve this problem, arrangements have already been proposed in which, initially, the outflow rate of the gases remains moderate gradually increasing in substantially linear manner, then during a second stage this flow rate increases considerably with a flow rate curve as a function of time having approximately the shape of a semi-hyperbolic tangent whose slope at the start is distinctly steeper than the slope of the initial linear portion, but gradually decreases and finally stabilizes to reach a nominal flow rate until complete inflation of the airbag.

Said curve representing the variation in flow rate as a function of time is usually designated an "S curve" in the trade, owing to its approximate "S" shape.

The initial phase with linear flow rate allows a pulse to be generated capable of initiating deployment of the airbag without placing sudden demand on its envelope, after which complete fast deployment can occur corresponding to actual inflation of the airbag.

The duration of the initial phase, by way of indication, is in the order of around ten milliseconds.

Hybrid generators which function with an S curve such as indicated have already been proposed, the state of the art in the matter possibly being illustrated by document FR 2 902 389 already mentioned and by document US 6 237 950.

According to FR 2 902 389, the combustion chamber which contains the pyrotechnic charge is separated from the gas reservoir via a nozzle consisting of an orifice capped with rupture disk. The escape of the gas towards the diffuser comprising the discharge orifices can occur via two orifices with rupture disk that are provided in a nozzle fixed at the opposite end of this reservoir. One of the rupture disks is adapted to rupture under the effect of a pressure wave generated on rupture of the rupture disk of the combustion chamber, whilst the other is calibrated to rupture at a later time when the pressure inside the gas reservoir reaches a determined threshold value.

The subject of US 6 223 950 is a staged hybrid generator. It comprises a tubular container acting as reservoir for the gas under pressure. One of the ends of the container is provided with a casing containing a double pyrotechnic charge positioned in the reservoir and lying adjacent the initiator (placed outside). At its other end, the container is closed by a bottom element which carries a diffuser comprising the discharge orifices. Communication between the reservoir and the diffuser is achieved by a pair of orifices with rupture disk adapted so that they rupture under different pressure values.

Document EP 1 371 526 describes a generator structure in which the section of the discharge orifices in the wall of the case does not vary. This function is allocated to a rupture disk arranged in the body of the generator.

These known devices have the disadvantage that the presence of the orifices with rupture disk, which govern the S-curve functioning of the generator, lie within the generator inside the container.

The construction of the generator is therefore specific to said functioning: if conventional functioning is desired or if an S configuration of different shape is required, it is necessary to modify the inner structure of the generator.

The present invention sets out to overcome this disadvantage by proposing a hybrid generator of the indicated type, in which control over escape of the gases, in order to obtain this S curve, takes place at the diffuser i.e. at the discharge orifice - or orifices - supplying the inflatable bag, and not at the inner structure of the generator.

The subject-matter of the invention is therefore a gas generator according to claim 1 in order to inflate an inflatable protective airbag for automotive vehicle, this generator being of hybrid type, comprising a case of elongate tubular shape which contains two sources of gases able concomitantly to inflate the airbag, the first consisting of at least one pyrotechnic charge whose ignition caused by pyrotechnic initiator generates combustion gases, the second consisting of a gas stored under pressure in an enclosed chamber, the wall of this case being traversed by at least one discharge orifice through which the gases leaving the case enter into the airbag to be inflated.

According to the invention, the passageway section of said discharge orifice through which the gases pass varies during the functioning of the generator, this section being already open and narrow during a first phase allowing a limited, controlled gas flow, and then becoming wider allowing a strong flow, the increase in this passageway section occurring when the gas pressure reaches a predetermined pressure threshold.

The discharge orifice (or orifices), through which the gas flow is thus controlled, are placed here just downstream of the generator and just upstream of the airbag, taking into consideration the pathway of the inflating gases.

The means used at this level, to ensure said control and allowing the above-mentioned S-curve to be obtained are therefore independent of the design and structure of the device and contained inside the case.

Also, according to a certain number of possible additional characteristics of the invention:
- the generator comprises two discharge orifices, or series of discharge orifices, a first orifice or a first series of orifices being adapted to allow passing of the gases as soon as said first functioning phase of the generator takes place, whilst the second orifice or second series of orifices is adapted to allow passing of the gases only after this first phase, when the pressure of the gases reaches said predetermined pressure threshold;
- the first orifice or orifices of the first series of orifices is (are) open, whilst the second orifice or orifices of the second series of orifices is (are) closed by a calibrated rupture disk able to rupture under the effect of the pressure of the gases when this pressure reaches said predetermined pressure threshold;
- the generator comprises a single discharge orifice or a single series of orifices whose passageway section is able to increase through rupture then deformation of its (their) edges under the effect of the pressure of the gases when this pressure reaches said predetermined pressure threshold;
- the discharge orifice or orifices is (are) bordered by a grooved wall whose grooving is calibrated and acts as rupture line when the pressure of the gases reaches said predetermined pressure threshold, which allows the passage section for the gases to be widened;
- the discharge orifice or orifices is (are)
   pierced radially in the side wall of the case;
- the chamber to store the gas under pressure is closed by a rupture disk, this rupture disk leading into said mixing chamber and being adapted to rupture under the action of the combustion gases generated by ignition of the pyrotechnic charge, these combustion gases entering into the mixing chamber via a nozzle.

Other characteristics and advantages of the invention will become apparent on reading the following description of two preferred embodiments of the invention.

This description is made with reference to the appended drawings in which:
- Figure 1 is an axial cross-section of a gas generator according to the invention;
- Figure 2 is a similar view to Figure 1, showing a variant of the generator;
- Figure 3 is a graph giving a simulated graph showing the variation in the inflating capacity developed by the gases generated by the generator as a function of time, with a generator of conventional type (curve Do) and with a generator conforming to the invention (curve D);
- Figure 4 is an overhead detail view of an insert joined to the side wall of the tubular container of the generator in Figure 2, this insert having a discharge orifice bordered by a grooved wall;
- Figures 4A, 4B, and 4C are respectively a cross-section along plane A-A in Figure 4, a side view in the direction of arrows C-C, and a cross-section along plane C-C ;
- Figures 4D and 4E are similar views to those in Figures 4C and 4 respectively, after rupture of the grooved wall.

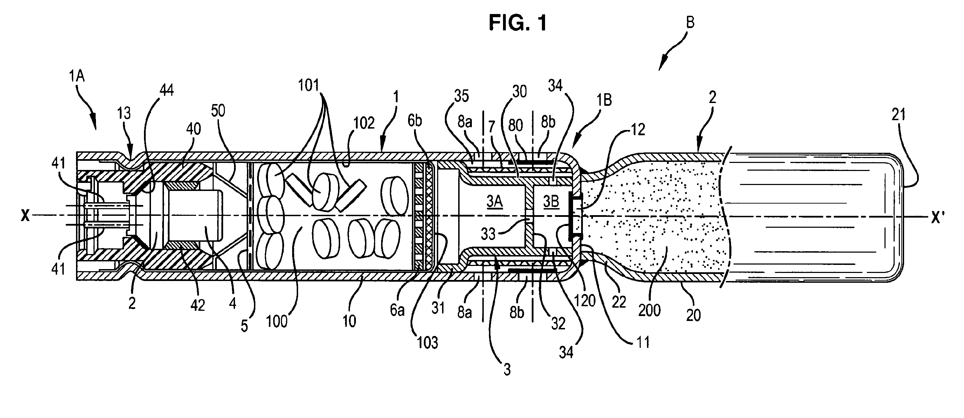

The gas generator shown Figure 1 comprises a tubular case B of elongate shape, globally cylindrical, having an axis **X-X'.**

This case B is formed of two tubular elements substantially of same diameter, coaxially fixed end to end for example by welding, namely a container 1 and a reservoir 2.

The container 1 is open at one 1A of its ends (on the left in the figure) having a mouth, whilst its other end 1B is closed by a flat bottom 11 arranged crosswise i.e. perpendicular to axis **X-X'.**

The (circumferential) side wall portion 10 of the container located in the vicinity of this bottom part 11 has several radial discharge orifices.

More precisely, two series of separate orifices 8a, 8b are provided whose axial positions (along X-X') are offset from each other.

These orifices are circular holes for example.

This series comprises a certain number of orifices distributed at regular angles around axis X-X' either on the entire circumference of the container, or on an arc of circumference only, depending upon applications.

As an example, there may be eight orifices distributed at an angle of 45°.

The orifices communicate directly with the inner space of the airbag to be inflated (not shown).

This generator comprises a pyrotechnic initiator 4 of the usual type with connecting pins 41; it is arranged axially in the mouth 1a of the container 1.

More precisely, the pyrotechnic initiator 2 is mounted inside an intermediate part or adapter sleeve 40.

The latter has an inner opening whose contour matches the contour of the initiator 2; this opening, on the "open" side of the container 1 (towards the left in the figure), has a truncated shoulder against which a bevelled face abuts which has a shape matching the body of the initiator 4, with insertion of an annular seal 44 caught between the two bearing faces. On the opposite side (towards in the right in the figure), the initiator 4 is maintained centred along axis **X-X',** and held in axial translation by a stop bushing 42 press fitted and/or glued inside the adapter sleeve 40.

This sleeve is itself fitted into the mouth 11 of the container 1 and held fixedly inside the container by insetting by means of a neck 13 made in the annular wall which enters into a peripheral groove of the adapter sleeve.

Therefore, the sub-assembly consisting of the adapter sleeve 3 and pyrotechnic initiator 2 is fixedly mounted in the end portion 1A of container 1.

A bushing 3 is arranged on the other side of this container.

This bushing has a cylindrical main portion 30 whose outer diameter is smaller than the inner diameter of the container 1, and a mouth 31 facing the "open" side of the container 1 (towards the left in the figure).

The outer diameter of this mouth portion 31 is equal to the inner diameter of the container 1, which at the time of assembly allows axial press fitting with certain clamping of the bushing 3 inside the container.

The edge opposite the bushing 3 (towards the right in the figure) comes to abut the bottom part 11 of the container 11.

Between the initiator 4 and this bushing 3 a pyrotechnical charge 100 is arranged consisting of pellets 101 of propellant for example.

These are encapsulated inside a cylindrical tubular casing 102 with a thin wall in scarcely ductile material e.g. steel, press fitted into the container without any clearance.

Its mouth portion faces the "open" side of the container 1 (towards the left in the figure); this portion is press fitted around the adapter sleeve 40 and is joined to the latter and to the container by the above-mentioned crimp neck 13.

On the inner side of container 1 (towards the right in the figure), this casing 102 is closed by a transverse bottom wall 103.

The mass of pellets of propellant 101 is pushed back towards this bottom wall 103 and packed tight inside the casing 102 by means of washer 5. This acts as piston. Demand is placed upon it by elastically deformable members such as a spring or flexible tabs 50 bearing against the adapter sleeve 40.

The washer 5 is largely perforated so as not to impair ignition of the pyrotechnic charge 100 by the initiator 4.

At the other end (towards the right in the figure) the pellets 101 of propellant do not bear directly against the bottom wall 103. They bear against a perforated washer 6a which itself bears against a disc-shaped filter 6b; it is this filter which is in contact with the bottom wall 103.

The washer 5, pushed back by the flexible tabs 50, compensates the dead volume left inside the pellet load and wedges this load.

The inner space of the casing 102 forms a combustion chamber for the pyrotechnic charge 100.

The bottom wall 103 is positioned just at the entry to the mouth 31 of the bushing 3. This wall acts as rupture disk, allowing a rise in pressure before rupture in the combustion chamber which guarantees good combustion of the pyrotechnic charge.

The filter 6b has a gas-permeable wall and is relatively narrow thickness; it is made in a light material resistant to the hot gases generated by combustion of the pyrotechnic charge 100 and has a porous, perforated and/or openwork structure adapted for this type of application.

Its function is to prevent undue escape of the constituent parts of the pyrotechnic charge and other solid particles outside the casing 102 towards the inside of the bushing 3 when the bottom part 103 ruptures.

The main portion 30 of the bushing 3 is subdivided innerly by a transverse partition 32 pierced in its centre by a small hole 33 which acts as nozzle. The inner space of the bushing is therefore compartmented into an upstream chamber 3A (on the side of the pyrotechnic charge) and a downstream chamber 3B (on the side of the bottom part 11).

This chamber 3B is called the "mixing chamber".

Opposite this chamber, the side wall 30 of the bushing is pierced with a set of radial holes 34 distributed at regular angles around its circumference; for example there are eight holes arranged at an angle of 45°.

Also, outside this wall 30 but inside the container 1, a sleeve 7 is press fitted which has a porous wall and covers the holes 34.

It also ensures a filter function able to prevent escape of undesirable solid particles outside the chamber 3B via the holes 34 during functioning of the generator.

The inner face of the wall 10 of the container 1 is lined with a rupture ring 80. This is a sleeve of fine thickness in a friable, scarcely ductile material e.g. steel which covers the series of orifices 8b. This sleeve is tightly press fitted into the container 1 and/or glued against the inner face of its wall 10.

It is to be noted that the ring 80 does not cover the other series of orifices 8a which therefore remain open. They are therefore never closed, plugged or covered.

Hereinafter the term "diffusion chamber" is used to designate the annular space 35 inside the container 1 which surrounds portion 30 of bushing 3.

The gas reservoir 2 is also in the shape of a tube having a side wall 20, a bottom wall 21 and a neck 22 via which it is fixed, welded for example, against the bottom wall 11 of the container 1.

The bottom wall 21, as is usual, comprises an opening through which a gas under pressure can be placed inside the reservoir 2, this opening being closed by an appropriate plug after filling. These known elements are not shown here so as not to encumber the present description or drawings unnecessarily.

At the centre of the bottom 11 of the container 1, a circular opening 12 is pierced able to cause the mixing chamber 3B to communicate with the inside of the reservoir 2.

Nevertheless this opening is hermetically sealed at the time of assembly by a rupture disk 120 which has sufficient mechanical resistance to prevent the gas under pressure 200 contained in the reservoir from escaping outside.

The gas 200 is an inert gas for example such as argon, helium, or a mixture of these two gases, and the storage pressure is in the order of 50 MPa.

The functioning of this hybrid generator will now be explained..

A vehicle equipped therewith is provided with appropriate deceleration sensors which, in the event of an accident, produce an electric signal converted into a pyrotechnic signal by the initiator 4.

This causes ignition of a primary pyrotechnic charge which produces heat and pressure which propagate as far as the propellant pellets 101 passing through the openings of the washer 5.

These pellets burn and generate hot gases at increasing high pressure which, beyond a given value, cause rupture of the bottom 103 of the combustion chamber, this bottom part acting as rupture disk.

The gases, filtered by the porous disc 6b, enter into the chamber 3A of the bushing 3, then pass through the nozzle 33 and enter into the chamber 3B.

This nozzle channels the gas flow towards the rupture disk 120 and causes its rupture. The gas under pressure 200 can then escape from the reservoir 20 via the opening 12 into chamber 3B where it is mixed with the gas itself under great pressure generated by combustion, which it partly cools.

This mixture escapes via the radial orifices 34 into the peripheral diffusion chamber 35 after passing through the filter sleeve 7; this filter retains any solid particles present in the gaseous mixture, which may derive in particular from debris of the rupture disks 103 or 34.

During a first phase, said mixture passes through the open orifices 8a and these orifices only since orifices 8b are closed.

The through section for the gases is therefore limited so that the gas flow is relatively small. It allows a pulse to be given inside the airbag able to "pre-deploy" the airbag without damaging the wall of its envelope. The flow rate increases over time in substantially linear fashion with a relatively gentle slope.

The flow rate being small, the pressure increases in the diffusion chamber since the combustion of the pyrotechnic charge and the emptying of the reservoir continue concomitantly.

Beyond a given pressure threshold which - by way of indication - is in the order of 60 MPa for example, the annular rupture disk 80 ruptures at the orifices 8b through shearing of matter. Therefore, these orifices are uncovered and in turn allow the gases to pass.

The total passageway section of the orifices 8b is preferably greater than that of orifices 8a.

This corresponds to a second functioning phase, during which the gases which escape from the generator to ensure inflation of the airbag pass through both orifices 8a and 8b, which permits a strong flow rate capable of inflating the inflatable airbag rapidly and completely.

This strong flow rate is not detrimental on account of the "pre-deployment" already carried out.

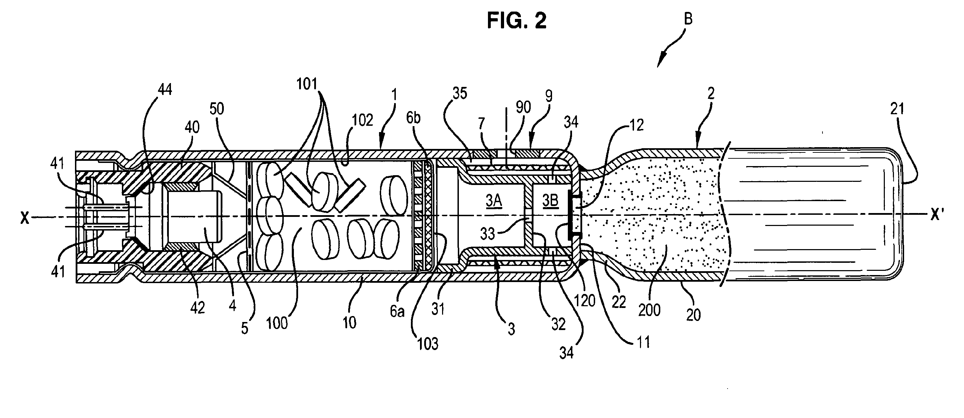

Figure 2 shows a variant of the gas generator just described.

In this figure, the same references are used as in Figure 1 to designate identical or similar parts.

These common elements will not further be described to avoid encumbering the present description unnecessarily.

The variant in Figure 2 differs from the embodiment in Figure 1 through the design of the discharge orifices.

A single set of discharge orifices 90 is provided, which are arranged in inserts 9 fixed inside receiver openings of matching shape made in the container 1, opposite the diffusion chamber 35.

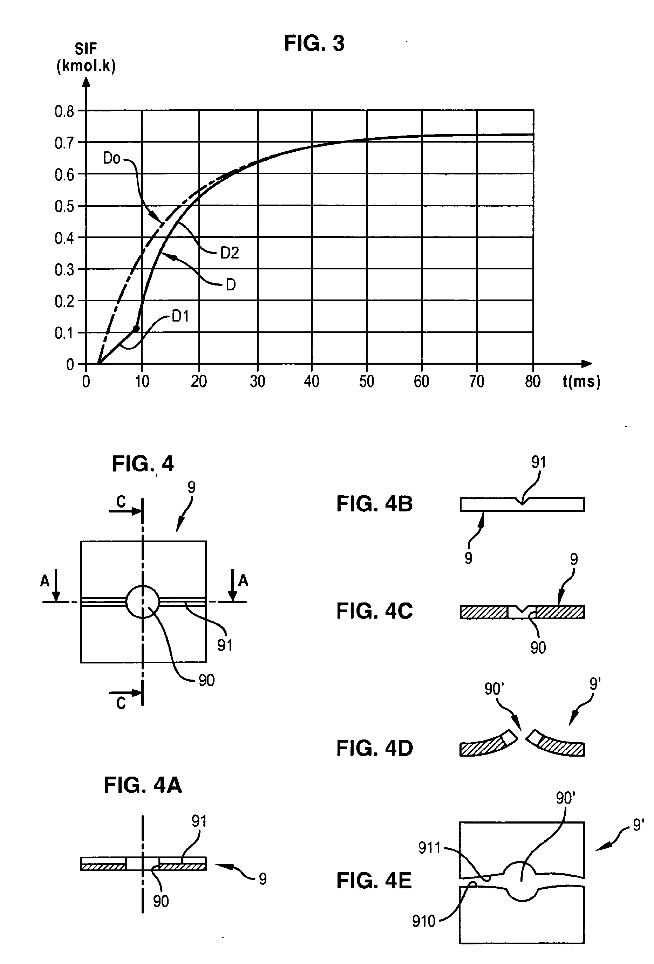

With reference to Figures 4, 4A, 4B, and 4C, an orifice 90 is shown of circular shape which is edged by a groove 91 arranged diametrically relative to its centre and made in the outer face of the wall of the insert.

Preferably, this groove is oriented along the generatrixes of the cylindrical wall 10 of the container 1.

The groove 91 consists of two lines weakening the mechanical resistance of the wall, which extend on each side of the orifice 90.

During the first functioning phase of the generator, the gas mixture passes through the orifices 90 at a limited flow rate.

During a second phase, when the gas pressure reaches a given threshold, the wall of the insert is seen to rupture along the lines of weakness.

This situation is illustrated Figures D and 4E which show the insert referenced 9' after this rupture. The discharge orifice designated 90' is widened whilst the edges of the cut-out 910-911 have drawn away from each other, folding outwardly.

The through section for the gases is therefore notably larger than before the rupture.

Several orifices 90 can evidently be made on one same insert, the insert possibly consisting of a cylindrical sleeve.

The rupture lines may have various shapes and configurations, e.g. "cross-shaped".

These orifices, like the rupture lines, may evidently be formed directly in the side wall 10 of the container 1.

The diagram in Figure 3 gives a simulation of two curves representing the capacity of the airbag to inflate as a function of time.

This magnitude is usually called SIF for Sum Inflating Flow, and its unit is mol.Kelvin. It defines the inflating power of a gas generator.

The curve Do in a dashed line represents the functioning of a conventional hybrid generator.

It is ascertained that this capacity increases suddenly, straight after activation of the generator, with a curve close to a semi-curve of hyperbolic tangent.

The slope is steep right from the start, then decreases progressively until it becomes constant.

Curve D represents the functioning of a hybrid generator according to the invention.

It is ascertained that the first phase, which lasts around 10 ms after triggering of the safety device, comprises a part corresponding to the linear part of the curve D1 with a relatively gentle slope (low gas flow rate); after this phase, resulting from opening of orifices 8b or rupture of line 91, there is a curve D2 whose profile corresponds to that of curve Do.

The two curves join together after around 20 ms, which means that, for the actual inflation of the airbag after its "pre-deployment", the process is similar to that observed with a conventional hybrid generator.

The design of the hybrid generator according to the invention allows its easy adaptation to desired curve configurations.

For this purpose, all that is required is to act on the number of discharge orifices and their surface area, and on the rupture calibration of the rupture disk 80 or line of weakness 91, which makes it possible to control flow rates and the pressure threshold determining the implementation of the second phase.

It is not necessary to act on the very structure of the generator inside the case.

## Claims

1. A gas generator for inflating an inflatable protective airbag for a vehicle, this generator being of the hybrid type, including a case (B) of elongate tubular shape that contains two sources of gas which are designed to effect, together, the inflation of the airbag, the first composed of at least one pyrotechnic charge (100) whose ignition, triggered by a pyrotechnic initiator (4), generates combustion gases, and the second consisting of a gas (200) stored under pressure in a closed chamber (2), the wall of this case being traversed by at least one discharge orifice (8; 9) by which the gases that exit from the case enter into the airbag so as to inflate it, **characterised by** the fact that the discharge orifice or orifices (8a, 8b; 90) is (are) positioned in a central or approximately central region of the case (B), in relation to its axial direction (X-X'), and in that said discharge orifice or orifices (8a, 8b; 90) is (are) positioned substantially facing a chamber (35), called a mixing chamber, in which mixing of the gases derived from each of said sources takes place, this chamber being located between the pyrotechnic charge (100) and the chamber (2) storing the gas under pressure (200) and in that the section of passage of the gases through said discharge orifice (8; 9) varies during the operation of the generator, this section being already open and small in a first phase, allowing a limited and controlled flow of gas, and then larger, allowing a high gas flow, with the widening of this passage section occurring when the pressure of the gases reaches a predetermined pressure threshold.

2. A gas generator according to claim 1, **characterised by** the fact that it includes two discharge orifices, or two series of discharge orifices (8a, 8b), with a first orifice, or a first series of orifices (8a), being designed to allow passage of the gases right from said first phase of operation of the generator, while the second orifice, or the second series of orifices (8b), is designed to allow passage of the gases only at the end of this first phase, when the pressure of the gases reaches said predetermined pressure threshold.

3. A gas generator according to claim 2, **characterised by** the fact that the first orifice, or the orifices (8a) of the first series of orifices, is (are) open, while the second orifice(s), or the orifices (8b) of the second series of orifices, is (are) closed off by a calibrated rupture disk (80), which is designed to rupture under the effect of the pressure of the gases when this pressure reaches said predetermined pressure threshold.

4. A gas generator according to claim 1, **characterised by** the fact that it includes a single discharge orifice (90), or a single series of orifices, whose passage section is able to increase by rupturing and then the deformation of its (their) edge(s) under the effect of the pressure of the gases when this pressure reaches said predetermined pressure threshold.

5. A gas generator according to claim 4, **characterised by** the fact that the discharge orifice or orifices is (are) edged !by a grooved wall, whose grooving (91) is calibrated and serves as a line of rupture when the pressure of the gases reaches said predetermined pressure threshold, and results in increasing the passage section of the gases.

6. A gas generator according to any of claims 1 to 5, **characterised by** the fact that the discharge orifice or orifices (8a, 8b; 90) is (are) pierced radially in the lateral wall (10) of the case.

7. A gas generator according to any of claims 1 to 6, **characterised by** the fact that the chamber (2) storing of the gas under pressure (200) is sealed with a rupture disk, its rupture disk (120) leading into said mixing chamber (35) and being designed to rupture under the action of the combustion gases generated by the ignition of the pyrotechnic charge (100), these combustion gases entering into the mixing chamber (35) via a nozzle (33).

## Patentansprüche

1. Gasgenerator zum Aufblasen eines aufblasbaren Schutzairbags für ein Kraftfahrzeug, wobei dieser Generator vom Hybridtyp ist, der ein Gehäuse (B) mit einer länglichen Röhrenform aufweist, das zwei Gasquellen enthält, die dafür ausgelegt sind, gemeinsam das Aufblasen des Airbags zu bewirken, wobei die erste aus mindestens einem pyrotechnischen Satz (100) besteht, dessen Zündung, ausgelöst von einem pyrotechnischen Zünder (4), Verbrennungsgase erzeugt, und die zweite aus einem Gas (200) besteht, das unter Druck in einer geschlossenen Kammer (2) gespeichert ist, wobei die Wand dieses Gehäuses von mindestens einer Ausströmöffnung (8; 9) durchquert wird, durch die die Gase, die aus dem Gehäuse austreten, in den Airbag strömen, um ihn aufzublasen, **dadurch gekennzeichnet, dass** die Ausströmöffnung oder -öffnungen (8a, 8b; 90) bezogen auf die axiale Richtung (X-X') in einem mittigen oder ungefähr mittigen Bereich des Gehäuses (B) platziert ist (sind), und dadurch, dass die Ausströmöffnung oder - öffnungen (8a, 8b; 90) im Wesentlichen einer Kammer (35) zugewandt platziert ist (sind), die als Mischkammer bezeichnet wird, in der die Vermischung der Gase, die aus jeder der Quellen stammen, stattfindet, wobei sich diese Kammer zwischen dem pyrotechnischen Satz (100) und der Kammer (2), die das unter Druck stehende Gas (200) speichert, befindet, und dadurch, dass sich der Querschnitt zum Durchströmen der Gase durch die Ausströmöffnung (8; 9) während des Betriebs des Generators ändert, wobei dieser Querschnitt in einer ersten Phase bereits offen und gering ist und einen begrenzten und kontrollierten Gasdurchsatz ermöglicht, und dann größer ist und einen hohen Gasdurchsatz ermöglicht, wobei die Verbreiterung dieses Durchströmquerschnitts erfolgt, wenn der Druck der Gase eine festgelegte Druckschwelle erreicht.

2. Gasgenerator nach Anspruch 1, **dadurch gekennzeichnet, dass** er zwei Ausströmöffnungen oder zwei Reihen von Ausströmöffnungen (8a, 8b) aufweist, wobei eine erste Öffnung oder eine erste Reihe von Öffnungen (8a) ausgelegt ist, das Durchströmen der Gase direkt ab der ersten Betriebsphase des Generators zuzulassen, während die zweite Öffnung oder die zweite Reihe von Öffnungen (8b) ausgelegt ist, das Durchströmen der Gase nur am Ende dieser ersten Phase zuzulassen, wenn der Druck der Gase die festgelegte Druckschwelle erreicht.

3. Gasgenerator nach Anspruch 2, **dadurch gekennzeichnet, dass** die erste Öffnung oder die Öffnungen (8a) der ersten Reihe von Öffnungen offen ist (sind), während die zweite(n) Öffnung(en) oder die Öffnungen (8b) der zweiten Reihe von Öffnungen mit einer kalibrierten Berstscheibe (80) verschlossen ist (sind), die ausgelegt ist, unter der Einwirkung des Drucks der Gase zu bersten, wenn dieser Druck die festgelegte Druckschwelle erreicht.

4. Gasgenerator nach Anspruch 1, **dadurch gekennzeichnet, dass** er eine einzelne Ausströmöffnung (90) oder eine einzelne Reihe von Öffnungen aufweist, deren Durchströmquerschnitt durch Zerreißen und anschließend die Verformung ihres (ihrer) Rands (Ränder) unter der Einwirkung des Drucks der Gase, wenn dieser Druck die festgelegte Druckschwelle erreicht, vergrößerbar ist.

5. Gasgenerator nach Anspruch 4, **dadurch gekennzeichnet, dass** die Ausströmöffnung oder -öffnungen am Rand mit einer genuteten Wand versehen ist (sind), deren Vertiefung (91) normiert ist und als Reißlinie dient, wenn der Druck der Gase die festgelegte Druckschwelle erreicht, und zu einer Vergrößerung des Durchströmquerschnitts für die Gase führt.

6. Gasgenerator nach einem der Ansprüche 1 bis 5, **dadurch gekennzeichnet, dass** die Ausströmöffnung oder -öffnungen (8a, 8b; 90) radial in die Seitenwand (10) des Gehäuses gebohrt ist (sind).

7. Gasgenerator nach einem der Ansprüche 1 bis 6, **dadurch gekennzeichnet, dass** die Kammer (2), die das unter Druck stehende Gas (200) speichert, mit einer Berstscheibe verschlossen ist, wobei ihre Berstscheibe (120) in die Mischkammer (35) führt und ausgelegt ist, unter der Einwirkung der Verbrennungsgase, die durch Zünden des pyrotechnischen Satzes (100) erzeugt werden, zu bersten, wobei diese Verbrennungsgase über eine Düse (33) in die Mischkammer (35) strömen.

## Revendications

1. Générateur de gaz pour gonfler un coussin gonflable de protection destiné à un véhicule, ce générateur étant du type hybride, comportant un boîtier (B) de forme tubulaire allongée qui contient deux sources de gaz qui sont conçues pour provoquer, ensemble, le gonflage du coussin gonflable, la première composée d'au moins une charge pyrotechnique (100) dont l'allumage, déclenché par un initiateur pyrotechnique (4), génère des gaz de combustion, et la seconde consistant en un gaz (200) stocké sous pression dans une chambre fermée (2), la paroi de ce boîtier étant traversée par au moins un orifice d'échappement (8 ; 9) par lequel les gaz sortant du boîtier entrent dans le coussin gonflable de façon à le gonfler, **caractérisé par le fait que** l'orifice ou les orifices d'échappement (8a, 8b ; 90) est (sont) positionné(s) dans une zone centrale ou approximativement centrale du boîtier (B), par rapport à sa direction axiale (X-X'), et en ce que ledit (lesdits) orifice ou orifices d'échappement (8a, 8b ; 90) est (sont) positionné(s) essentiellement faisant face à une chambre (35), appelée chambre de mélange, dans laquelle le mélange des gaz tirés de chacune desdites sources a lieu, cette chambre étant située entre la charge pyrotechnique (100) et la chambre (2) stockant le gaz sous pression (200) et en ce que la section de passage des gaz à travers ledit orifice d'échappement (8 ; 9) varie pendant le fonctionnement du générateur, cette section étant déjà ouverte et petite dans une première phase, permettant un débit limité et contrôlé du gaz, puis plus grande, permettant un débit élevé du gaz, l'élargissement de cette section de passage ayant lieu quand la pression des gaz atteint un seuil de pression prédéterminé.

2. Générateur de gaz selon la revendication 1, **caractérisé par le fait qu'**il comporte deux orifices d'échappement, ou deux séries d'orifices d'échappement (8a, 8b), un premier orifice, ou une première série d'orifices (8a), étant conçu(e) pour permettre le passage des gaz dès ladite première phase de fonctionnement du générateur, tandis que le second orifice, ou la seconde série d'orifices (8b), est conçu(e) pour permettre le passage des gaz uniquement à la fin de cette première phase, quand la pression des gaz atteint ledit seuil de pression prédéterminé.

3. Générateur de gaz selon la revendication 2, **caractérisé par le fait que** le premier orifice, ou les orifices (8a) de la première série d'orifices, est (sont) ouvert(s), tandis que le(s) second(s) orifice(s), ou les orifices (8b) de la seconde série d'orifices, est (sont) fermé(s) par un disque de rupture (80) calibré, qui est conçu pour rompre sous l'effet de la pression des gaz quand cette pression atteint ledit seuil de pression prédéterminé.

4. Générateur de gaz selon la revendication 1, **caractérisé par le fait qu'**il comporte un orifice d'échappement (90) unique, ou une série unique d'orifices, dont la section de passage est capable d'augmenter par la rupture puis la déformation de son (leur) bord(s) sous l'effet de la pression des gaz quand cette pression atteint ledit seuil de pression prédéterminé.

5. Générateur de gaz selon la revendication 4, **caractérisé par le fait que** l'orifice ou les orifices d'échappement est (sont) bordé(s) par une paroi rainurée, dont le rainurage (91) est calibré et sert de ligne de rupture quand la pression des gaz atteint ledit seuil de pression prédéterminé, et a pour résultat d'augmenter la section de passage des gaz.

6. Générateur de gaz selon l'une quelconque des revendications 1 à 5, **caractérisé par le fait que** l'orifice ou les orifices d'échappement (8a, 8b ; 90) est (sont) percé(s) radialement dans la paroi latérale (10) du boîtier.

7. Générateur de gaz selon l'une quelconque des revendications 1 à 6, **caractérisé par le fait que** la chambre (2) stockant le gaz sous pression (200) est scellée avec un disque de rupture, son disque de rupture (120) menant dans ladite chambre de mélange (35) et étant conçu pour rompre sous l'action des gaz de combustion générés par l'allumage de la charge pyrotechnique (100), ces gaz de combustion entrant dans la chambre de mélange (35) via une buse (33).
